# EUROPEAN PATENT SPECIFICATION

(11) **EP 3 446 045 B1**
(45) Date of publication and mention of the grant of the patent: **02.06.2021**
(21) Application number: 17719833.0
(22) Date of filing: 21.04.2017
(51) Int. Cl.: F24H 1/00, F22B 37/48, F24H 9/00, F24H 9/20

(54) **BOILER**
KESSEL
CHAUDIÈRE

(30) Priority: 22.04.2016 IT UA20162817
(43) Date of publication of application: 27.02.2019
(73) Proprietor: De' Longhi Appliances S.r.l. Con Unico Socio, 31100 Treviso (IT)
(72) Inventor: DE' LONGHI, Giuseppe, 31100 TREVISO (IT); LORENZON, Antonio, 31043 FONTANELLE (IT); GIROTTO, Riccardo, 31050 PONZANO VENETO (IT)
(74) Representative: Petraz, Gilberto Luigi
(86) International application number: PCT/EP2017/059575
(87) International publication number: WO 2017/182664

(56) References cited:
- EP-A2- 1 568 948
- WO-A1-99/39139
- WO-A2-2010/139599
- DE-A1- 19 537 590
- US-A- 552 406
- US-A- 1 531 348
- US-A- 5 921 207
- US-A1- 2014 060 457

## Description

### FIELD OF THE INVENTION

The present invention concerns a boiler for generating steam and/or for heating water, usable in domestic appliances and professional machines such as, for example, ironing or cleaning apparatuses, coffee machines, steamers for cooking food, steam ovens and suchlike.

The present invention also concerns a device to remove limescale disposed inside the boiler and selectively activated to remove the limescale deposited and anchored on the internal walls of the boiler.

### BACKGROUND OF THE INVENTION

Boilers used to selectively generate steam and/or to heat water in domestic appliances and professional machines normally comprise a metal container, hermetically closed, provided with at least an entrance aperture for the water, and possible with an exit aperture for the steam.

A heating element is normally associated with the metal container, generally an electric resistance or plate, which functions as a heat source, selectively activated to generate the desired quantity and/or quality of steam and/or to take the water to the desired temperature.

Boilers normally also comprise one or more detection devices to detect the temperature and/or pressure inside the metal container, so as to monitor them and/or control them depending on the desired value, and also to prevent them from exceeding determinate safety values.

It is known that, when the boiler is used and due to heating the water, formations of limescale are generated inside the metal container, consisting of calcium carbonate and/or other minerals such as magnesium, potassium, silicon, etc., normally dissolved in the water.

These formations of limescale can remain in suspension or are deposited to form incrustations of increasing thickness on the internal walls of the metal container, in particular on the hot zones, thus influencing the functioning of both the means that generate the heat and also the detection devices.

A reduced heat transmission and/or an incorrect, or delayed, detection of the temperature or pressure can lead on the one hand to a waste of energy, and on the other hand to the safety values being exceeded, and hence at least to damage to the boiler.

It is known to provide an exit hole in the container, to remove the water contained inside it and to remove the limescale present in suspension in the water discharged.

Solutions are also known which provide to use elements with an elongated shape, also gutter-shaped, that function as elements to collect the limescale and that can be removed from the boiler.

However, these known solutions are often not completely satisfactory and decisive, since they allow to remove only a part of the limescale from inside the container, that is, only part of the limescale in suspension.

Document DE 195 37 590 discloses a boiler according to the preamble of claim 1 and a method according to the preamble of claim 17, and describes a container for collecting heated water for domestic use, or for drinking. The container is provided with a cleaning device disposed on the bottom, the drive of which is activated by feeding the liquid entering the collection container.

Document US 1,531,348 describes a boiler comprising a cylindrical container which is provided on the bottom with a scraping ring having an external blade that extends toward the internal surface and toward the bottom of the container, adapting to the lower portion of the container.

One purpose of the present invention is to obtain a boiler to generate steam and/or to heat water, which allows to prevent, or at least greatly reduce, the formation of layers of limescale on the internal walls and/or allows to remove formations of limescale from them.

A correlated purpose is to reduce the risk of excessive energy supplies, and alterations in the measurements of the parameters of interest, such as temperature and pressure, due to the interference of the formations of limescale with both the heat sources and with the measuring elements.

Another purpose is to obtain a boiler to generate steam that is simple, economical, reliable and long-lasting.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe preferred embodiments of the present invention.

In accordance with the above purposes, the present invention concerns a boiler for generating steam and/or for heating water that comprises a metal container provided at least with a feed aperture to introduce water inside it, with a heating element, and with a discharge aperture able to be selectively opened/closed to discharge the water and possible particles of limescale in suspension and/or particles detached from the wall of the container.

The boiler also comprises a limescale removal device, disposed at least partly inside the container, and able to be selectively activated from the outside, and suitable to cooperate with at least part of the bottom wall and/or with at least part of the lateral walls of the container to remove layers of limescale formed on the walls of the container.

The boiler also comprises at least a detection device configured to detect physical quantities of the water and/or limescale associated with the container.

According to the present invention, the boiler comprises a control and command unit associated with the removal device and with the detection device and configured to coordinate the activation and speed of rotation of the removal device as a function of the values detected by the detection device.

According to a variant embodiment, the detection device can be a device to detect the hardness of the water. In this way, when the hardness of the water exceeds a determinate threshold, the control and command unit is able to identify a situation in which an intervention is necessary to clean the container using the removal device.

According to another variant embodiment, the detection device can be an optical sensor that detects the degree of the limescale deposits on the internal walls of the container.

According to another variant embodiment, the detection device is an electric conductivity sensor that detects the degree of the limescale deposits on the internal walls of the container.

According to another variant embodiment, the detection device is a temperature sensor configured to detect over time the temperature of the water contained in the container. Depending on the range of time needed to reach the preset heating temperature of the water, it is possible to identify what the quantity of limescale deposited on the walls of the container is.

According to one embodiment, the metal container has at least a circular portion of the bottom wall. In this way, by making the removal device rotate around an axis passing through the center of the circular portion, it is possible to clean the whole container efficiently.

According to one embodiment, the removal device comprises at least a cleaning element shaped like a blade or a scraper, disposed inside the container so as to have at least one edge cooperating with at least part of the bottom wall and/or with at least part of the internal lateral wall.

According to one embodiment, the cleaning element is made of a partly flexible material.

According to one embodiment, the cleaning element is associated with a selectively rotating shaft, associated with an axis substantially orthogonal to the at least circular portion of the bottom wall.

This configuration allows the cleaning element, when activated, to cooperate with at least the bottom wall and possibly with at least part of the lateral wall.

Moreover, thanks to its flexibility, the cleaning element adapts to the specific internal conformation of the metal container, and can exert an adequate pressure to remove limescale which has even consolidated on the walls.

The present invention also concerns a method for cleaning a metal container of a boiler for generating steam and/or heating water, which provides:
- to introduce water into the container, through a feed aperture,
- to heat the water with a heating element,
- to remove particles of limescale present on at least part of a bottom wall and/or a lateral wall of the metal container with a rotating removal device disposed at least partly in the container,
- to discharge water and possible particles from the container, through a selectively openable/closable discharge aperture, and
- to detect with a detection device values of physical quantities relating to the container.

According to the present invention, the method provides to transmit values of the physical quantities detected to a control and command unit associated withthe removal device and the detection device, to coordinate the activation and rotation speed of the removal device as a function of the values detected.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a view in vertical section and in perspective of a boiler according to one embodiment;
- fig. 2 is a view in vertical section and in perspective of a boiler according to another embodiment;
- fig. 3 shows an enlarged detail of the boiler in fig. 1.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

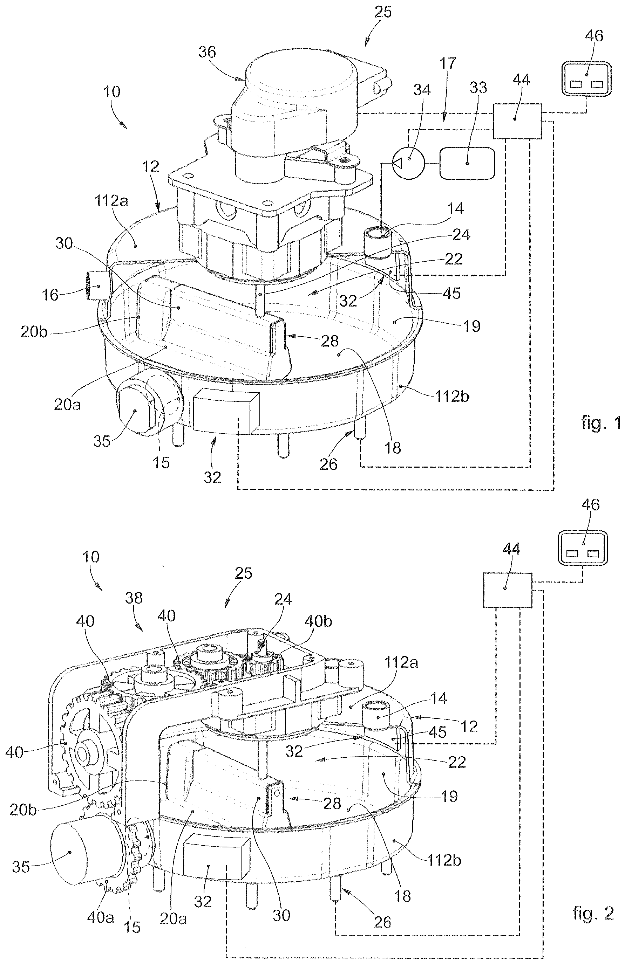

Embodiments described here with reference to figs. 1 and 2 concern a boiler 10 for generating steam and/or for heating water, according to the invention.

The boiler 10 comprises a metal container 12, suitable to contain the water and possibly also to transform it into steam, which in this case has an at least partly circular surface in correspondence with a bottom wall 18.

The container 12 in this case comprises two shells, upper 112a and lower 112b, closed or able to be closed hermetically.

The container 12 is provided with a feed aperture 14 to introduce the water.

According to one embodiment, the boiler 10 can comprise a feed device 17 connected to the feed aperture 14 and configured to introduce the water into the container 12.

According to possible solutions, the feed device 17 can comprise a containing tank 33 to contain the water, and a feed pump 34 provided to transfer the water from the containing tank 33 to the container 12.

In the solution shown, the container 12 can also be provided with an exit aperture 16 for the steam generated inside the container 12, as will be described hereafter.

The steam exit aperture 16 can be connected to user devices and possible steam regulation devices, for example an electromechanical valve or suchlike.

According to some embodiments described here, the container 12 can be provided with a discharge aperture 15, able to be selectively opened/closed to discharge the water and possible particles, for example limescale that has formed in the container 12.

A cap 35 can be associated with the discharge aperture 15, to selectively open/close the discharge aperture 15.

The discharge aperture 15 can be made on the lateral wall 19 of the container 12 (as shown in figs. 1 and 2), although a different position is not excluded, for example in correspondence with the bottom wall 18 of the container 12.

The boiler 10 comprises at least one heating element 26 associated with the container 12, configured to heat the water to the desired temperature.

According to a possible solution of the present invention, the at least one heating element 26 can be installed solidly in contact with the container 12 so that the heating element 26 heats the container 12 through heat conduction, and also therefore the water contained therein.

Furthermore, the position of the heating element 26 outside the container 12 prevents it from being affected by the formation of limescale.

According to a variant, not shown, the heating element 26 can be installed inside the container 12.

Furthermore, at least a device 32 to detect physical quantities is associated with the container 12, for example, but not only, temperature and/or pressure, of the environment inside the container 12.

According to possible solutions, the detection device 32 can advantageously be situated outside.

According to a variant, the detection device 32 can cooperate at least partly with the inside of the container 12.

According to a variant embodiment, the detection device 32 can comprise a device 45 to detect the hardness of the water, disposed in the container 12.

In some solutions, the device to detect the hardness of the water 45 is positioned in the container 12 so that it does not interfere with the rotation of the removal device 22.

For example, the device to detect the hardness of the water 45 can be a conductivity meter, configured to detect the conductivity of the water contained in the container 12.

According to a possible solution, the detection device 32 can comprise a sensor to detect the thickness of the wall of the container 12 and the thickness of possible incrustations of limescale that are formed. In this case, merely by way of example, it can be provided that the detection device 32 comprises an ultrasound sensor.

According to another variant, the detection device 32 can comprise a temperature sensor configured to detect the temperature of the water in the container 12 and the interval of time needed to reach a preset temperature.

In particular, if the heating element 26 is installed outside the container 12 and heats it through conduction, the presence of a layer of limescale on the walls 18, 19 of the container 12 causes a drastic reduction in the capacity to transfer heat to the water, and therefore causes longer times to heat it.

Therefore, if heating times are detected that are higher than predetermined intervals, it is possible to identify conditions where an operation to clean the limescale in the container 12 is required.

In fact, the detection device 32 can be able to detect possible increases in the interval of time required to reach the preset temperature, for example between about 115°C and about 140°C, and as a result it is possible to deduce the quantity of limescale deposited on the internal walls of the container 12.

Consequently, using one and/or the other of the detection devices 32 described above, it is possible to identify the moment when it is necessary to clean the container 12 before an excessive accumulation of limescale is able to cause problems for the boiler 10.

According to the present invention, the boiler 10 comprises a removal device 22, disposed at least partly in the container 12 and cooperating with the bottom wall 18 and/or the lateral walls 19 of the container 12 to remove, when activated, incrustations and deposits of limescale that have present on the walls.

According to the present invention, the boiler 10 comprises a control and command unit 44 associated, for example connected, to the removal device 22.

The control and command unit 44 is associated with the detection device 32 so as to correlate at least the activation and rotation speed of the removal device 22 as a function of the values detected by the detection device 32.

According to possible solutions, the control and command unit 44 can be associated with the feed device 17 to selectively activate the feed of water inside the container 12.

Merely by way of example, according to a possible solution, it can be provided that the feed device 17 is configured to feed inside the container 12 water at a temperature lower than 50°C, preferably lower than 30°C. The introduction of cold water, that is, at a temperature lower than that of the water heated in the container 12, which is usually above 100°C, causes thermal shocks in the container 12 and in the limescale present, which causes the limescale to separate from the walls of the container 12.

In the embodiment shown in the attached drawings, the removal device 22 is connected to a rotation shaft 24, positioned during use substantially coaxial with the central axis of the container 12.

When driven, the rotation shaft 24 makes the removal device 22 rotate, and its terminal parts operate on the respective walls of the container 12, exerting a mechanical removal action that detaches the limescale from the walls and disperses it in the form of particles in the water inside the container 12.

According to embodiments described here, the rotation shaft 24 can be positioned around the center of the surface of the circular bottom wall 18.

It comes within the field of the invention to provide that the rotation shaft 24 can rotate in both directions so as to increase the effectiveness of the removal, that is, it can perform programmed oscillations, for example of 180° in one direction and 180° in the opposite direction, or by other desired angles.

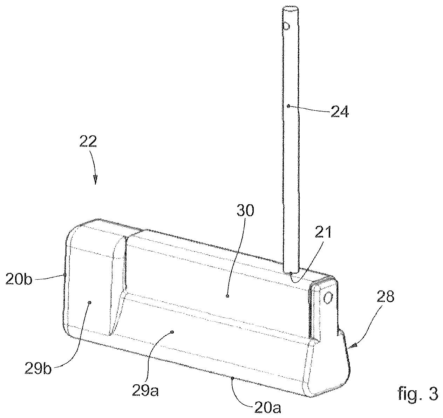

According to one embodiment, the removal device 22 is provided with at least one cleaning element 28 conformed as a blade, spatula or scraper, having at least a lower edge 20a and a front edge 20b that come into contact with the walls to be cleaned (fig. 3).

The lower edge 20a has a length substantially equal to the radius of the circular container 12, while the front edge 20b can be raised with respect to the lower edge 20a to cooperate with at least part of the lateral internal wall 19 of the container 12.

Near one end, the cleaning element 28 has hole means 21 so that it can be associated with the rotation shaft 24.

According to one embodiment, the cleaning element 28 is made of at least partly flexible material, although possibly having a certain hardness and/or abrasiveness, so that it can adapt to the conformation of the internal walls of the container 12.

For example, the cleaning element 28 can be made using flexible bristles or pads, made of metal, plastic or heat-resistant rubber material, of wire wool, metal mesh or a combination of two or more of these materials.

When made to rotate, the cleaning element 28 mechanically removes the incrustations of limescale from the walls, so as to prevent the limescale from calcifying in correspondence with the heating element 26 and/or the detection devices 32.

The removal operation can be programmed and subjected to a time factor, time/heating factor, or the factor relating to the reduction in sensitivity of the detection devices, or to the increase in energy absorbed by the heating element 26.

The cleaning element 28 can be supported by a support element 30 made of metal material or heat-resistant plastic, which can be directly associated with the rotation shaft 24. The lower 29a and front 29b bristles or pads that define respectively the lower 20a and front 20b cleaning edges can be directly mounted on the support element 30.

The flexible bristles or pads 29a and 29b are advantageously replaceable through the discharge aperture 15 that can be selectively opened/closed by the cap 35, in this case suitably shaped and structured.

In a variant embodiment shown by way of example in fig. 1, the rotation shaft 24 is associated with a drive member 25 that causes the rotation to be transmitted to the removal device 22.

The drive member 25 is connected to the control and command unit 44 to coordinate its drive as a function of the device to detect the hardness of the water 45.

According to an embodiment shown by way of example in fig. 1, the drive member 25 can comprise a motor device 36 to make the removal device 22 rotate in an automated manner.

The motor device 36 can be suitably attached to the boiler 10, for example to the container 12.

The motor device 36 can be connected to the control and command unit 44 to coordinate its drive as a function of the detections of the detection device 32.

Merely by way of example, the control and command unit 44 can control and regulate drive factors, for example speed, frequency and duration interval of the rotation of the removal device 22.

Furthermore, the control and command unit 44 can be configured to compare the values detected by the device to detect the hardness of the water 45 with preset limit values memorized in the control and command unit 44.

Advantageously, using the motor device 36, the removal device 22 can be made to rotate at a determinate speed, to prevent possible turbulence in the water inside the container 12, and can be programmed to be driven according to desired methods.

According to possible solutions, the control and command unit 44 is connected to the motor device 36, the feed device 17 and the heating element 26, to command the drive of all three and to define a cycle to clean the incrustations of limescale generated in the container 12.

In particular, when the detection device 32 detects an excessive accumulation of limescale, and therefore a reduction in the efficiency of the boiler, the control and command unit 44 can start, either automatically or as confirmed by a user, the cycle to clean the incrustations of limescale.

In particular, the control and command unit 44 can drive the motor device 36, according to a preset or contextual time sequence, so that it makes the removal device 22 rotate, drive the heating element 26 to heat the water contained in the container 12, and drive the feed device 17 so that it supplies cleaning water to the container 12, possibly combined with the thermal shock described above.

In fact, thanks to this combination of actions, it is possible to exert both a mechanical action of the cleaning device and also thermal shocks which allow to maximize the cleaning of the internal walls of the container 12.

According to a variant embodiment, the boiler 10 can comprise a user interface 46 connected to the control and command unit 44.

The user interface 46 is configured to send signals to a user as a function of the device to detect the hardness of the water 45.

For example, the user interface 46 is configured to emit luminous and/or acoustic signals, and/or messages or suchlike.

The user interface 46 can also comprise command elements provided to supply drive commands for the boiler, for example for starting the heating of the water, setting the heating parameters, starting the cleaning cycle, or suchlike.

According to a variant embodiment, shown for example in fig. 2, the drive member 25 can comprise a mechanical transmission unit 38, drivable manually by a user as a function of the signals sent by the user interface 46.

According to possible solutions, the mechanical transmission unit 38 comprises a plurality of kinematic elements, in this case toothed wheels 40, configured to transmit the rotation to the rotation shaft 24 of the removal device 22 by rotating the cap 35, or a knob suitably provided for said purpose, by a user.

According to a possible solution, the cap 35 can be screwed into the discharge aperture 15 of the container 12 to allow or prevent the exit of the water and particles from the container 12.

The cap 35 can be provided with a toothed wheel 40a connected kinematically to the kinematic elements, that is, in this case to the toothed wheels 40.

The rotation shaft 24 of the removal device 22 is provided with a toothed pinion 40b also connected kinematically with the kinematic elements, that is, in this case to the toothed wheels 40. In this way, by unscrewing the cap 35 from the discharge aperture 15, it is possible to make the removal device 22 rotate until the cap 35 is completely released from the discharge aperture 15.

The threading parameters provided in the cap 35, such as for example the pitch and the length of the thread, determine the number of rotations of the removal device 22 in the container 12, and hence a predefined cleaning cycle.

Advantageously, the user interface 46 is configured to warn the user to drive the mechanical transmission unit 38 and/or to empty the container 12 to allow the water and particles of limescale in suspension to exit.

The mechanical transmission unit 38 can also include the possibility of being manual and easily activated by the user.

It is clear that modifications and/or additions of parts may be made to the boiler 10 and the removal device 22 as described heretofore, without departing from the scope of the present invention.

It is also clear that, although the present invention has been described with reference to some specific examples, a person of skill in the art shall certainly be able to achieve many other equivalent forms of boiler 10 and removal device 22, having the characteristics as set forth in the claims and hence all coming within the field of protection defined thereby.

## Claims

1. A boiler for generating steam and/or for heating water, comprising:
- a metal container (12) provided at least with a feed aperture (14) to introduce water inside it, a heating element (26), a discharge aperture (15) able to be selectively opened/closed to discharge said water and possible particles,
- a rotatable limescale removal device (22) disposed at least partly inside said container (12), able to be selectively activated from the outside and suitable to cooperate with at least part of a bottom wall (18) and/or with at least part of a lateral wall (19) of the metal container (12),
- at least a detection device (32) configured to detect values of physical quantities concerning the water and/or limescale inside the boiler, associated with said container (12) and
- a control and command unit (44),
**characterized in that** the control and command unit (44) is associated with said removal device (22) and with said at least one detection device (32) and is configured to coordinate the activation and the speed of rotation of said removal device (22) as a function of the values detected by said at least one detection device (32).

2. Boiler as in claim 1, **characterized in that** said detection device (32) comprises at least a device to detect the hardness of the water (45) disposed inside said container (12):

3. Boiler as in claim 1 or 2, **characterized in that** it comprises a drive member (25) associated with a rotation shaft (24) of said removal device (22), and configured to make the latter rotate.

4. Boiler as in claim 3, **characterized in that** said drive member (25) comprises a motor device (36) to make said removal device (22) rotate in an automated manner.

5. Boiler as in claim 4, **characterized in that** said motor device (36) is connected to said control and command unit (44) in order to coordinate its drive as a function of the values detected by said detection device (32).

6. Boiler as in any claim hereinbefore, **characterized in that** it comprises a feed device (17) connected to said feed aperture (14) and configured to feed said water into said container (12), said control and command unit (44) being associated with said feed device (17) and being configured to selectively activate said feed device (17).

7. Boiler as in claims 4, 5 and 6, **characterized in that** said control and command unit (44) is connected to said motor device (36), to said feed device (17) and to said heating element (26), and is configured to command the drive of all three and to define the cycle to clean the incrustations of limescale generated in said container (12).

8. Boiler as in any claim hereinbefore, **characterized in that** it comprises a user interface (46) connected to said control and command unit (44) and configured to send signals to a user as a function of the values detected by said detection device (32)

9. Boiler as in claim 8, **characterized in that** said drive member (25) comprises a mechanical transmission unit (38) drivable manually by a user as a function of the signals sent by said user interface (46).

10. Boiler as in claim 9, **characterized in that** a cap (35) is associated with said discharge aperture (15) to selectively open/close said discharge aperture (15), **and in that** said mechanical transmission unit (38) comprises a plurality of kinematic elements (40) connected to said cap (35) and to a rotation shaft (24) of said removal device (22), so that the rotation of said cap (35) determines the rotation of said removal device (22).

11. Boiler as in claim 10, **characterized in that** said cap (35) is screwed into said discharge aperture (15) of the container (12), **in that** said cap (35) is provided with a toothed wheel (40a) kinematically connected to said kinematic elements (40), **and in that** said rotation shaft (24) of the removal device (22) is provided with a toothed pinion (40b) also connected kinematically with said kinematic elements (40).

12. Boiler as in any claim hereinbefore, **characterized in that** at least one portion of said bottom wall (18) of said container (12) is circular.

13. Boiler as in any claim hereinbefore, **characterized in that** said removal device (22) comprises at least a cleaning element (28), having at least a lower edge (20a) cooperating with said bottom wall (18) and/or a front edge (20b) cooperating with said lateral wall (19).

14. Boiler as in any claim 13, **characterized in that** said cleaning element (28) is at least partly flexible.

15. Boiler as in any claim 13 or 14, **characterized in that** said cleaning element (28) comprises a rigid support (30) supporting flexible bristles or pads (29a, 29b) made in one or another of the following materials and structures: metal material, heat-resistant plastic material, steel wool, metal mesh or heat-resistant rubber material, or a combination of two or more of these materials and structures.

16. Boiler as in any claim 13 to 15, **characterized in that** said cleaning element (28) is associated with a rotation shaft (24) able to be selectively activated, said rotation shaft (24) being positioned around the center of the surface of said bottom wall (18) conformed as a circular surface.

17. Method for cleaning a metal container (12) of a boiler (10) according to claim 1 for generating steam and/or heating water, which provides to introduce water into said container (12) through a feed aperture (14), to heat said water with a heating element (26), to remove particles of limescale present on at least part of a bottom wall (18) and/or a lateral wall (19) of said metal container (12) with a rotatable limescale removal device (22) disposed at least partly in said container (12), to discharge water and possible particles from said container (12) through a selectively openable/closable discharge aperture (15), and to detect with a detection device (32) values of physical quantities relating to water and/or limescale inside said container (12), **characterized in that** it provides to transmit the detected values of said physical quantities to a control and command unit (44) associated with the removal device (22) and with the detection device (32) to coordinate the activation and rotation speed of the removal device (22) as a function of the values detected.

## Patentansprüche

1. Kessel zur Erzeugung von Dampf und/oder zum Erhitzen von Wasser, umfassend:
- einen Metallbehälter (12), der mit mindestens einer Zuführöffnung (14) zum Einführen von Wasser in sein Inneres, einem Heizelement (26), einer Auslassöffnung (15), die selektiv geöffnet/verschlossen werden kann, um das Wasser und etwaige Partikel auszulassen, versehen ist,
- eine rotierbare Vorrichtung (22) zur Beseitigung von Kalkablagerungen, die zumindest teilweise im Inneren des Behälters (12) angeordnet ist, selektiv von außen aktiviert werden kann und geeignet ist, mit wenigstens einem Teil einer Bodenwand (18) und/oder mit wenigstens einem Teil einer Seitenwand (19) des Metallbehälters (12) zu kooperieren,
- mindestens eine mit dem Behälter (12) verbundene Detektionsvorrichtung (32), die so konfiguriert ist, dass sie Werte physikalischer Größen betreffend das Wasser und/oder Kalkablagerungen im Inneren des Kessels detektiert, und
- eine Steuer- und Befehlseinheit (44),
**dadurch gekennzeichnet, dass** die Steuer- und Befehlseinheit (44) mit der Beseitigungsvorrichtung (22) und mit der mindestens einen Detektionsvorrichtung (32) verbunden ist und so konfiguriert ist, dass sie die Aktivierung und die Rotationsgeschwindigkeit der Beseitigungsvorrichtung (22) in Abhängigkeit von den durch die mindestens eine Detektionsvorrichtung (32) detektierten Werten koordiniert.

2. Kessel gemäß Anspruch 1, **dadurch gekennzeichnet, dass** die Detektionsvorrichtung (32) mindestens eine Vorrichtung zur Detektion der Härte des im Inneren des Behälters (12) befindlichen Wassers (45) umfasst.

3. Kessel gemäß Anspruch 1 oder 2, **dadurch gekennzeichnet, dass** er ein Antriebselement (25) umfasst, das mit einer Rotationswelle (24) der Beseitigungsvorrichtung (22) verbunden ist und so konfiguriert ist, dass es die letztere zum Rotieren bringt.

4. Kessel gemäß Anspruch 3, **dadurch gekennzeichnet, dass** das Antriebselement (25) eine Motorvorrichtung (36) umfasst, die die Beseitigungsvorrichtung (22) in automatisierter Art und Weise zum Rotieren bringt.

5. Kessel gemäß Anspruch 4, **dadurch gekennzeichnet, dass** die Motorvorrichtung (36) mit der Steuer- und Befehlseinheit (44) verbunden ist, um ihren Antrieb in Abhängigkeit von den durch die Detektionsvorrichtung (32) detektierten Werten zu koordinieren.

6. Kessel gemäß irgendeinem vorhergehenden Anspruch, **dadurch gekennzeichnet, dass** er eine Zuführvorrichtung (17) umfasst, die mit der Zuführöffnung (14) verbunden ist und so konfiguriert ist, dass sie das Wasser dem Behälter (12) zuführt, wobei die Steuer- und Befehlseinheit (44) mit der Zuführvorrichtung (17) verbunden ist und so konfiguriert ist, dass sie die Zuführvorrichtung (17) selektiv aktiviert.

7. Kessel gemäß Anspruch 4, 5 und 6, **dadurch gekennzeichnet, dass** die Steuer-und Befehlseinheit (44) mit der Motorvorrichtung (36), der Zuführvorrichtung (17) und dem Heizelement (26) verbunden ist und so konfiguriert ist, dass sie den Antrieb von allen dreien steuert und den Zyklus zum Beseitigen der in dem Behälter (12) erzeugten Verkrustungen von Kalkablagerungen definiert.

8. Kessel gemäß irgendeinem vorhergehenden Anspruch, **dadurch gekennzeichnet, dass** er eine Benutzerschnittstelle (46) umfasst, die mit der Steuer-und Befehlseinheit (44) verbunden ist und so konfiguriert ist, dass sie Signale an einen Benutzer in Abhängigkeit von den durch die Detektionsvorrichtung (32) detektierten Werten sendet.

9. Kessel gemäß Anspruch 8, **dadurch gekennzeichnet, dass** das Antriebselement (25) eine mechanische Übertragungseinheit (38) umfasst, die manuell durch einen Benutzer in Abhängigkeit von den durch die Benutzerschnittstelle (46) gesendeten Signalen angetrieben werden kann.

10. Kessel gemäß Anspruch 9, **dadurch gekennzeichnet, dass** eine Kappe (35) mit der Auslassöffnung (15) verbunden ist, um die Auslassöffnung (15) selektiv zu öffnen/verschließen, und dass die mechanische Übertragungseinheit (38) eine Vielzahl von kinematischen Elementen (40) umfasst, die mit der Kappe (35) und einer Rotationswelle (24) der Beseitigungsvorrichtung (22) verbunden ist, so dass die Rotation der Kappe (35) die Rotation der Beseitigungsvorrichtung (22) bestimmt.

11. Kessel gemäß Anspruch 10, **dadurch gekennzeichnet, dass** die Kappe (35) in die Auslassöffnung (15) des Behälters (12) eingeschraubt ist, dass die Kappe (35) mit einem Zahnrad (40a) versehen ist, dass kinematisch mit den kinematischen Elementen (40) verbunden ist, und dass die Rotationswelle (24) der Beseitigungsvorrichtung (22) mit einem Ritzel (40b) versehen ist, das ebenso kinematisch mit den kinematischen Elementen (40) verbunden ist.

12. Kessel gemäß irgendeinem vorhergehenden Anspruch, **dadurch gekennzeichnet, dass** mindestens ein Teil der Bodenwand (18) des Behälters (12) kreisförmig ist.

13. Kessel gemäß irgendeinem vorhergehenden Anspruch, **dadurch gekennzeichnet, dass** die Beseitigungsvorrichtung (22) mindestens ein Reinigungselement (28) umfasst, das mindestens eine mit der Bodenwand (18) kooperierende Unterkante (20a) und/oder eine mit der Seitenwand (19) kooperierende Vorderkante (20b) aufweist.

14. Kessel gemäß Anspruch 13, **dadurch gekennzeichnet, dass** das Reinigungselement (28) zumindest teilweise flexibel ist.

15. Kessel gemäß Anspruch 13 oder 14, **dadurch gekennzeichnet, dass** das Reinigungselement (28) ein starres Tragelement (30) umfasst, welches flexible Borsten oder Pads (29a, 29b) trägt, die in den folgenden Materialien oder Strukturen ausgeführt sind: Metallmaterial, hitzebeständiges Kunststoffmaterial, Stahlwolle, Metallgitter oder hitzebeständiges Gummimaterial oder eine Kombination von zweien oder mehreren dieser Materialien und Strukturen.

16. Kessel gemäß irgendeinem Anspruch 13 bis 15, **dadurch gekennzeichnet, dass** das Reinigungselement (28) mit einer Rotationswelle (24) verbunden ist, die selektiv aktiviert werden kann, wobei die Rotationswelle (24) um die Mitte der einer kreisförmigen Fläche entsprechenden Oberfläche der Bodenwand (18) herum positioniert ist.

17. Verfahren zum Reinigen eines Metallbehälters (12) eines Kessels (10) gemäß Anspruch 1 zur Erzeugung von Dampf und/oder zum Erhitzen von Wasser, welches das Einführen von Wasser in den Behälter (12) durch eine Zuführöffnung (14), das Erhitzen des Wassers mit einem Heizelement (26), das Beseitigen von Partikeln von Kalkablagerungen, die auf wenigstens einem Teil einer Bodenwand (18) und/oder einer Seitenwand (19) des Metallbehälters (12) vorliegen, mit einer rotierbaren Vorrichtung (22) zur Beseitigung von Kalkablagerungen, die zumindest teilweise in dem Behälter (12) angeordnet ist, das Ablassen von Wasser und etwaigen Partikeln aus dem Behälter (12) durch eine selektiv zu öffnende/verschließbare Auslassöffnung (15) und das Detektieren von Werten physikalischer Größen in Bezug auf das Wasser und/oder die Kalkablagerungen im Inneren des Behälters (12) mittels einer Detektionsvorrichtung (32) bereitstellt, **dadurch gekennzeichnet, dass** es die Übertragung der detektierten Werte der physikalischen Größen an eine mit der Beseitigungsvorrichtung (22) und der Detektionsvorrichtung (32) verbundene Steuer- und Befehlseinheit (44) bereitstellt, um die Aktivierung und Rotationsgeschwindigkeit der Beseitigungsvorrichtung (22) in Abhängigkeit von den detektierten Werten zu koordinieren.

## Revendications

1. Chaudière pour générer de la vapeur et/ou pour chauffer de l'eau, comprenant :
- un récipient métallique (12) pourvu au moins d'une ouverture d'alimentation (14) pour introduire de l'eau à l'intérieur de celui-ci, un élément chauffant (26), une ouverture d'évacuation (15) pouvant être sélectivement ouverte/fermée pour évacuer ladite eau et d'éventuelles particules,
- un dispositif rotatif d'élimination de calcaire (22) disposé au moins partiellement à l'intérieur dudit récipient (12), pouvant être sélectivement activé de l'extérieur et approprié pour coopérer avec au moins une partie d'une paroi de fond (18) et/ou avec au moins une partie d'une paroi latérale (19) du récipient métallique (12),
- au moins un dispositif de détection (32) configuré pour détecter des valeurs de quantités physiques concernant l'eau et/ou le calcaire à l'intérieur de la chaudière, associé audit récipient (12) et
- une unité de contrôle et de commande (44),
**caractérisée en ce que** l'unité de contrôle et de commande (44) est associée audit dispositif d'élimination (22) et audit au moins un dispositif de détection (32) et est configurée pour coordonner l'activation et la vitesse de rotation dudit dispositif d'élimination (22) en fonction des valeurs détectées par ledit au moins un dispositif de détection (32).

2. Chaudière selon la revendication 1, **caractérisée en ce que** ledit dispositif de détection (32) comprend au moins un dispositif pour détecter la dureté de l'eau (45) disposé à l'intérieur dudit récipient (12).

3. Chaudière selon la revendication 1 ou 2, **caractérisée en ce qu'**elle comprend un élément d'entraînement (25) associé à un arbre de rotation (24) dudit dispositif d'élimination (22), et configuré pour faire tourner ce dernier.

4. Chaudière selon la revendication 3, **caractérisée en ce que** ledit élément d'entraînement (25) comprend un dispositif de moteur (36) pour faire tourner ledit dispositif d'élimination (22) d'une manière automatisée.

5. Chaudière selon la revendication 4, **caractérisée en ce que** ledit dispositif de moteur (36) est connecté à ladite unité de contrôle et de commande (44) afin de coordonner son entraînement en fonction des valeurs détectées par ledit dispositif de détection (32).

6. Chaudière selon l'une quelconque des revendications précédentes, **caractérisée en ce qu'**elle comprend un dispositif d'alimentation (17) relié à ladite ouverture d'alimentation (14) et configuré pour alimenter ladite eau dans ledit récipient (12), ladite unité de contrôle et de commande (44) étant associée audit dispositif d'alimentation (17) et étant configurée pour activer sélectivement ledit dispositif d'alimentation (17).

7. Chaudière selon les revendications 4, 5 et 6, **caractérisée en ce que** ladite unité de contrôle et de commande (44) est reliée audit dispositif de moteur (36), audit dispositif d'alimentation (17) et audit élément de chauffage (26), et est configurée pour commander l'entraînement des trois et pour définir le cycle pour nettoyer les incrustations de calcaire générées dans ledit récipient (12).

8. Chaudière selon l'une quelconque des revendications précédentes, **caractérisée en ce qu'**elle comprend une interface utilisateur (46) reliée à ladite unité de contrôle et de commande (44) et configurée pour envoyer des signaux à un utilisateur en fonction des valeurs détectées par ledit dispositif de détection (32).

9. Chaudière selon la revendication 8, **caractérisée en ce que** ledit élément d'entraînement (25) comprend une unité de transmission mécanique (38) pouvant être entraînée manuellement par un utilisateur en fonction des signaux envoyés par ladite interface utilisateur (46).

10. Chaudière selon la revendication 9, **caractérisée en ce qu'**un capuchon (35) est associé à ladite ouverture d'évacuation (15) pour ouvrir/fermer sélectivement ladite ouverture d'évacuation (15), **et en ce que** ladite unité de transmission mécanique (38) comprend une pluralité d'éléments cinématiques (40) reliés audit capuchon (35) et à un arbre de rotation (24) dudit dispositif d'élimination (22), de sorte que la rotation dudit capuchon (35) détermine la rotation dudit dispositif d'élimination (22).

11. Chaudière selon la revendication 10, **caractérisée en ce que** ledit capuchon (35) est vissé dans ladite ouverture d'évacuation (15) du récipient (12), **en ce que** ledit capuchon (35) est pourvu d'une roue dentée (40a) reliée cinématiquement auxdits éléments cinématiques (40), **et en ce que** ledit arbre de rotation (24) du dispositif d'élimination (22) est pourvu d'un pignon denté (40b) également relié cinématiquement auxdits éléments cinématiques (40).

12. Chaudière selon l'une quelconque des revendications précédentes, **caractérisée en ce qu'**au moins une partie de ladite paroi de fond (18) dudit récipient (12) est circulaire.

13. Chaudière selon l'une quelconque des revendications précédentes, **caractérisée en ce que** ledit dispositif d'élimination (22) comprend au moins un élément de nettoyage (28), ayant au moins un bord inférieur (20a) coopérant avec ladite paroi de fond (18) et/ou un bord avant (20b) coopérant avec ladite paroi latérale (19).

14. Chaudière selon la revendication 13, **caractérisée en ce que** ledit élément de nettoyage (28) est au moins partiellement flexible.

15. Chaudière selon la revendication 13 ou 14, **caractérisée en ce que** ledit élément de nettoyage (28) comprend un support rigide (30) supportant des poils ou des tampons flexibles (29a, 29b) fabriqués dans l'un ou l'autre des matériaux et structures suivants : matériau métallique, matériau plastique résistant à la chaleur, laine d'acier, treillis métallique ou matériau de caoutchouc résistant à la chaleur, ou une combinaison de deux ou plusieurs de ces matériaux et structures.

16. Chaudière selon l'une quelconque des revendications 13 à 15, **caractérisée en ce que** ledit élément de nettoyage (28) est associé à un arbre de rotation (24) pouvant être activé sélectivement, ledit arbre de rotation (24) étant positionné autour du centre de la surface de ladite paroi de fond (18) conformée en une surface circulaire.

17. Procédé de nettoyage d'un récipient métallique (12) d'une chaudière (10) selon la revendication 1 pour générer de la vapeur et/ou de l'eau de chauffage, qui prévoit d'introduire de l'eau dans ledit récipient (12) à travers une ouverture d'alimentation (14), de chauffer ladite eau avec un élément chauffant (26), d'éliminer des particules de calcaire présentes sur au moins une partie d'une paroi de fond (18) et/ou d'une paroi latérale (19) dudit récipient métallique (12) avec un dispositif rotatif d'élimination de calcaire (22) disposé au moins partiellement dans ledit récipient (12), d'évacuer l'eau et les particules possibles dudit récipient (12) à travers une ouverture d'évacuation (15) pouvant être ouverte/fermée sélectivement, et de détecter avec un dispositif de détection (32) des valeurs de quantités physiques relatives à l'eau et/ou au calcaire à l'intérieur dudit récipient (12), **caractérisé en ce qu'**il prévoit de transmettre les valeurs détectées desdites quantités physiques à une unité de contrôle et de commande (44) associée au dispositif d'élimination (22) et au dispositif de détection (32) pour coordonner l'activation et la vitesse de rotation du dispositif d'élimination (22) en fonction des valeurs détectées.
